# EUROPEAN PATENT SPECIFICATION

(11) **EP 1 698 458 B1**
(45) Date of publication and mention of the grant of the patent: **14.09.2011**
(21) Application number: 04807574.1
(22) Date of filing: 22.12.2004
(51) Int. Cl.: B32B 27/28, B32B 27/34, B32B 27/08, B32B 27/30

(54) **LAMINATE**
LAMINAT
LAMINE

(30) Priority: 24.12.2003 JP 2003426440
(43) Date of publication of application: 06.09.2006
(73) Proprietor: The Nippon Synthetic Chemical Industry Co., Ltd., Osaka-shi, Osaka 531-6029 (JP)
(72) Inventor: ONISHI, Hideshi, Kurashiki-shi (JP)
(74) Representative: TBK
(86) International application number: PCT/JP2004/019217
(87) International publication number: WO 2005/061224

(56) References cited:
- EP-A1- 1 108 729
- JP-A- 8 239 528
- JP-A- 11 012 398
- JP-A- 2000 063 607
- JP-A- 2000 136 281
- JP-A- 2002 146 135

## Description

### TECHNICAL FIELD

The present invention relates to a laminated article using a composition of a saponified product of an ethylene-vinyl acetate copolymer (hereinafter referred to as EVOH), and more specifically, relates to a laminated article excellent in appearance after a retort treatment, delamination resistance, and gas barrier property and, at the same time excellent in long-run processability, performance of preventing odor and coloring and the like.

### BACKGROUND ART

Conventionally, EVOH has been heavily used as various kinds of packing films representatively for foods, making use of gas barrier property and transparency thereof.

However, since the EVOH is hydrophilic, solubility in hot water is high, and when the EVOH is used as the intermediate layer of a multilayered film for boiling or retort, it is dissolved during a treatment with hot water, and the multilayered film may causes delamination. In order to improve the defect, a composition in which a polyamide resin is compounded in the EVOH is utilized as the multilayered film for boiling or retort as the intermediate layer.

Further, it is known for the purpose of improving properties such as gas barrier property, transparency, and long-run processability of the multilayered film for boiling or retort that alkali metal is further compounded in the composition of EVOH and a polyamide resin to be an intermediate layer (for example, see JP-A-4-131237) and an aliphatic metal salt is compounded (for example, see JP-A-7-97491).

JP 2200-146135 A discloses a resin composition obtained by melt blending of an ethylene-vinyl acetate copolymer (A), an organic substance-containing layered inorganic compound (B) and a polyamide resin (C).

Further, JP 11-012398 A discloses a resin composition comprising (A) an ethylene-vinyl acetate copolymer saponification product, (B) a thermoplastic resin, (C) a phenolic compound and (D) a phosphorus compound or an amine compound. Therein, the components A and B are contained in a (A)/(B) weight ratio of 97/3 to 70/30, and the components (C) and (D) are contained in amounts of 0.05-5 pts.wt., respectively, per 100 pts.wt. of the total amount of the components (A) and (B). Moreover, this document discloses a laminated product containing the resin composition as at least one layer.

### DISCLOSURE OF INVENTION

However, although the improvement effect of delamination caused by destruction of an EVOH layer at a boiling or retort treatment is recognized in any disclosed technologies of the references, further improvement is required under the recent severe treatment conditions (for example, a treatment time is elongated from conventional time of about 30 minutes to about 90 minutes), and although improvement effects concerning appearance after a retort treatment, gas barrier property and long-run processability (gel and black spot are not generated) are respectively recognized, further improvement is required. On the other hand, effects of preventing the odor and coloring of a multilayered film have been desired from the viewpoint of protecting ingredients.

Consequently, as a result of repeating intensive studies under the background, the present inventors found that a laminated article, comprising a layer (I) containing an EVOH (A) and a polyamide resin (B) and a layer (II) of a polyamide resin (C) which is adjacent to the layer (I) directly or via an adhesive resin layer,
wherein t an EVOH (A) contains a sodium salt (M1) and a bivalent metal salt (M2), and an amount ratio (M1/M2) of the sodium salt (M1) to the bivalent metal salt (M2) is 0.01 to 15 calculated in terms of metal weight, further comprising 3 to 50 ppm of a phosphorus compound calculated in terms of phosphorus and 10 to 1000 ppm of a hindered phenol antioxidant satisfies the above-mentioned object, and achieved completion of the present invention.

Further, in the present invention, it is one of preferable embodiments that the amount ratio (M1/M2) of the sodium salt (M1) to the bivalent metal salt (M2) is 0.02 to 5 calculated in terms of metal weight, the polyamide resin (B) is an end-capped polyamide resin, or the saponified product of an EVOH (A) further comprises a boron compound.

### BEST MODE FOR CARRYING OUT THE INVENTION

The present invention relates to a laminated article, comprising a layer (I) containing a saponified product of an ethylene-vinyl acetate copolymer (A) and a polyamide resin (B) and a layer (II) of a polyamide resin (C) which is adjacent to the layer (I) directly or via an adhesive resin layer, wherein the saponified product of an ethylene-vinyl acetate copolymer (A) contains a sodium salt (M1) and a bivalent metal salt (M2), and an amount ratio (M1/M2) of the sodium salt (M1) to the bivalent metal salt (M2) is 0.01 to 15 calculated in terms of metal weight, further comprising 3 to 50 ppm of a phosphorus compound calculated in terms of phosphorus and 10 to 1000 ppm of a hindered phenol antioxidant, wherein the phosphorus compound is selected from the group consisting phosphoric acid, sodium phosphate, disodium hydrogen phosphate, sodium dihydrogen phosphate, calcium hydrogen phosphate, potassium dihydrogen phosphate and dipotassium hydrogen phosphate.

The present invention is explained in detail in the following.

EVOH used in the present invention is not particularly limited, but those in which an amount of ethylene is 20 to 60 % by mol (further 23 to 58 % by mol, and particularly, 25 to 55 % by mol), and the saponification degree of a vinyl acetate component is at least 90 % by mol (further at least 95 % by mol and particularly at least 99 % by mol) are preferable. When the amount of ethylene is less than 5 % by mol, gas barrier property at a high humidity and processability decrease, and adversely, when the amount of ethylene is more than 70 % by mol, sufficient barrier property can not be obtained. Further, when the saponification degree of a vinyl acetate component is less than 90 % by mol, it is also not preferable since gas barrier property, thermal stability, moisture resistance and the like are lowered.

Also, a melt flow rate (MFR) of the EVOH (measured at 210°C, having a load of 2160 g) is preferably 0.5 to 100 g/10 min (more preferably 1 to 50 g/10 min, and particularly preferably 3 to 35 g/10 min). When the melt flow rate is less than 0.5 g/10 min, the inside of an extruder becomes in a high torque condition at molding and extrusion process tends to be difficult, and on the other hand, when the melt flow rate is larger than 100 g/10 min, it is not preferable since accuracy of the thickness of the obtained film and sheet tends to be lowered.

The EVOH is obtained by saponification of an ethylene-vinyl acetate copolymer. The ethylene-vinyl acetate copolymer is prepared by known arbitrary polymerization processes, such as solution polymerization, suspension polymerization, and emulsion polymerization, and saponification of the ethylene-vinyl acetate copolymer can be also carried out by known processes.

In the present invention, an ethylenically unsaturated monomer copolymerizable within a range which does not inhibit the effect of the present invention may be copolymerized with the EVOH (A). Examples of the monomer are: olefins such as propylene, 1-butene and isobutene; unsaturated acids such as acrylic acid, (meth)acrylic acid, crotonic acid, phthalic acid (and its anhydride), maleic acid (and its anhydride) and itaconic acid (and its anhydride) or salts thereof or mono or dialkyl esters having 1 to 18 carbon atoms; acrylamides such as acrylamide, N-alkylacrylamide having 1 to 18 carbon atoms, N,N-dimethylacrylamide, 2-acrylamide-propane sulfonic acid or a salt thereof, and acrylamide-propyldimethylamine or a salt thereof or a quaternary salt thereof; methacrylamides such as methacrylamide, N-alkylmethacrylamide having 1 to 18 of carbon atoms, N,N-dimethylmethacrylamide, 2-methacrylamide-propane sulfonic acid or a salt thereof, and methacrylamide-propyldimethylamine or a salt thereof or a quaternary salt thereof; N-vinyl amides such as N-vinyl-pyrrolidone, N-vinyl-formamide and N-vinyl-acetamide; vinyl cyanides such as acrylonitrile and methacrylonitrile; vinyl ethers such as alkyl vinyl ether having 1 to 18 of carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinyl silanes such as trimetoxy vinyl silane; allyl acetate, allyl chloride, allyl alcohol, dimethylallyl alcohol, trimethyl-(3-acrylamide-3-dimethylptopyl)-ammonium chloride, acrylamide-2-methylpropane sulfonic acid. Also, the EVOH may be subjected to post modification such as urethanation, acetalization and cyanoethylation within a range not damaging objects of the present invention.

In the present invention, the EVOH (A) contains a sodium salt (M1) and a bivalent metal salt (M2), and an amount ratio (M1/M2) of the sodium salt (M1) to the bivalent metal salt (M2) is 0.01 to 15 calculated in terms of metal weight.

Examples of the sodium salt (M1) are the sodium salts of organic acids such as acetic acid, propionic acid, butyric acid, laurylic acid, lauric acid, tridecyl acid, myristic acid, pentadecyl acid, palmitic acid, heptadecylic acid, stearic acid, hydroxystearic acid, nonadecanoic acid, oleic acid, capric acid, behenic acid, linolic acid and adipic acid; and inorganic acids such as sulfuric acid, sulfurous acid, carbonic acid and phosphoric acid, and among these, sodium acetate is preferable.

Further, examples of the bivalent metal salt (M2) are a calcium salt, a magnesium salt and a zinc salt of the inorganic acids excluding the above-mentioned organic acids, boric acid and phosphoric acid, and among these, magnesium acetate, magnesium stearate and zinc stearate are preferable.

It is necessary that an amount ratio (M1/M2) of the above-mentioned respective metal salts is 0.01 to 15 calculated in terms of metal weight (further 0.02 to 5, and particularly 0.03 to 3). When the amount ratio is less than 0.01, odor and coloring are severe, and inversely, when it exceeds 15, long-run processability is insufficient, and it becomes difficult to achieve the purpose of the present invention.

For containing the sodium salt (M1) and the bivalent metal salt (M2) in the EVOH (A), the EVOH (A) can contain them by bringing the EVOH (A) in contact with an aqueous solution or emulsion of the sodium salt (M1) and the bivalent metal salt (M2).

A process of bringing the EVOH (A) in contact with the aqueous solution or emulsion is not particularly limited, but it is preferable to contain the sodium salt (M1) and the bivalent metal salt (M2) in the EVOH (A) usually by charging the EVOH (A) which is molded in the state of pellets into the aqueous solution or emulsion while stirring.

Further, it is also necessary that the EVOH (A) contains the phosphorus compound in an amount of 3 to 50 ppm calculated in terms of phosphorus (further 5 to 40 ppm, and particularly 10 to 30 ppm). When the amount is less than 3 ppm, odor and coloring are severe and inversely, when it exceeds 50 ppm, long-run processability is insufficient, and it becomes difficult to achieve the purpose of the present invention.

The phosphorus compound is selected from the group consisting of phosphoric acid, sodium phosphate, disodium hydrogen phosphate, sodium dihydrogen phosphate, calcium hydrogen phosphate, potassium dihydrogen phosphate and dipotassium hydrogen phosphate, and among those, disodium hydrogen phosphate, sodium dihydrogen phosphate and calcium hydrogen phosphate are preferable.

The phosphorus compound can be also contained in the EVOH (A) by the same process as the metal salt described above.

Further, it is necessary that the EVOH (A) contains a hindered phenol antioxidant in an amount of 10 to 1000 ppm (further 15 to 500 ppm, and particularly 20 to 200 ppm). When the amount is less than 10 ppm, odor and coloring are severe, and inversely, when it exceeds 1000 ppm, odor and coloring are severe, and it becomes difficult to achieve the purpose of the present invention.

The hindered phenol base antioxidant includes antioxidants such as 2,5-di-t-butylhydroquinone, 2,6-di-t-butyl-p-cresol, 4,4'-thiobis-(6-t-butylphenol), 2,2'-methylene-bis(4-methyl-6-t-butylphenol), tetrakis-[methylene-3-(3',5'-di-t-butyl-4'-hydroxyphenyl) propionate]methane, N,N'-hexamethylene-bis(3,5-di-t-butyl-4'-hydroxy-hydrocinnamamide), 1,3,5-trimethyl-2,4,6-tris(3,5-di-t-butyl-4-hydroxylbenzyl)benzene, pentaerythritol tetrakis[3-(3,5-di-t-butyl-4-hydroxyphenol)propionate], triethylene glycol-bis[3-(3-t-butyl-5-methyl-4-hydroxyphenyl) propionate], 1,6-hexanediol-bis[3-(3,5-di-t-butyl-4-hydroxyphenyl) propionate] 2,4-bis-(n-octylthio)-6-(4-hydroxy-3,5-di-t-butylanilino)-1,3,5-triazine, 2,2-thio-diethylene bis[3-(3,5-di-t-butyl-4-hydroxyphenyl) propionate], octadecyl-3-(3,5-di-t-bu-tyl-4-hydroxyphenyl) propionate, 3,5-di-t-butyl-4-hydroxy-benzylphosphonate-diethyl ester, bis(ethyl 3,5-di-t-butyl-4-hydroxybenzyl phosphonate)calcium, tris-(3,5-di-t-butyl-4-hydroxybenzyl)-isocyanurate, 2,4-bis[(octylthio)methyl]-o-cresol, isooctyl-3-(3,5-di-t-butyl-4-hydroxyphenyl) propionate, n-octadecyl-3-(3,5-di-t-butyl-4-hydroxyphenyl)- -- propionate, 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 4,4'-butylidene bis(3-methyl-6-t-butylphenol), 4,4'-thiobis(3-methyl-6-t-butylphenol), 3,9-bis{2-[3-(3-t-butyl-4-hydroxy-5-methylphenyl)-propionyloxy]-1,1 -dimethylethyl}-2,4,8,10-tetraoxaspiro(5·5)undecane, and among these, pentaerythritol tetrakis[3-(3,5-di-t-butyl-4-hydroxyphenol)propionate] is preferably used.

The hindered phenol base compound can be also contained in the EVOH (A) by the same process as the metal salt described above.

Further, in the present invention, it is preferable that the EVOH (A) contains a boron compound from the viewpoint of stability in forming a film. Examples of the boron compound are boric acid, calcium borate, cobalt borate, zinc borate (such as zinc tetraborate, zinc metaborate), aluminum potassium borate, ammonium borate (such as ammonium metaborate, ammonium tetraborate, ammonium pentaborate, ammonium octaborate), cadmium borate (such as cadmium orthoborate, cadmium tetraborate), potassium borate (such as potassium metaborate, potassium tetraborate, potassium pentaborate, potassium hexaborate, potassium octaborate), silver borate (such as silver metaborate, silver tetraborate), copper borate (such as copper (II) borate, copper metaborate, copper tetraborate), sodium borate (such as sodium metaborate, sodium diborate, sodium tetraborate, sodium pentaborate, sodium hexaborate, sodium octaborate), lead borate (such as lead metaborate, lead hexaborate), nickel borate (such as nickel orthoborate, nickel diborate, nickel tetraborate, nickel octaborate), barium borate (such as barium orthoborate, barium metaborate, barium diborate, barium tetraborate), bismuth borate, magnesium borate (such as magnesium orthoborate, magnesium diborate, magnesium metaborate, trimagnesium tetraborate, pentamagnesium tetraborate), manganese borate (such as manganous borate, manganese metaborate, manganese tetraborate), lithium borate (such as lithium metaborate, lithium tetraborate, lithium pentaborate), additionally, borate minerals such as borax, Kernite, Inyoite, Kotoite, Suanite and Szaibelyite. Borax, boric acid and sodium borate (such as sodium metaborate, sodium diborate, sodium tetraborate, sodium pentaborate, sodium hexaborate, sodium octaborate) are preferably used.

An amount of the boron compound is not particularly limited, but it is preferable to be contained in an amount of 0.001 to 0.1 part by weight calculated in terms of metal weight (further 0.002 to 0.08 part by weight, and particularly 0.005 to 0.05 part by weight) based on 100 parts by weight of the EVOH (A). When the amount is less than 0.001 part by weight, an effect of the addition may fail to be sufficiently exhibited, and inversely, when it is more than 0.1 part by weight, it is not preferable since many fish eyes are generated in a molded article such as a film.

When the boron compound is contained in the EVOH (A), it can be also contained in the EVOH (A) by the same process as the metal salt described above.

In the laminated article of the present invention, it is possible to use at least two different kinds of EVOH, herein, it is useful to use a blended compound in which amounts of the ethylenes are different by at least 5 % by mol (further 5 to 25 % by mol, and particularly 8 to 20 % by mol), and/or saponification degrees thereof are different by at least 1 % by mol (further 1 to 15 % by mol, and particularly 2 to 10 % by mol), and/or the MFR ratio thereof is at least 2 (further 3 to 20, and particularly 4 to 15) as the at least two different kinds of EVOH, form the viewpoint that flexibility and stability of a film thickness are further improved while keeping gas barrier property. A process for preparing at least two different kind of EVOH (blended compound) is not particularly limited, and examples are a process of saponifying after mixing each paste of EVA (ethylene-vinyl acetate copolymer) before saponification, a process of mixing an alcohol of each EVOH after saponification or a mixture solution of water and an alcohol of each EVOH after saponification, and a process of melt-kneading each EVOH after mixing thereof.

Specific examples of the polyamide resin (B) used in the present invention are polycapramide (nylon 6), poly-ω-aminoheptanoic acid (nylon 7), poly-ω-aminononanoic acid (nylon 9), polyundecaneamide (nylon 11), polylauryllactam (nylon 12), polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polytoctamethylene adipamide (nylon 86), polydecamethylene adipamide (nylon 108), a caprolactam/lauryllactam copolymer (nylon 6/12), a caprolactam/ω-aminononanoic acid copolymer (nylon 6/9), a caprolactam/hexamethylenediammonium adipate copolymer (nylon 6/66), a lauryllactam/hexamethylenediammonium adipate copolymer (nylon 12/66), an ethylenediamine adipamide/hexamethylenediammonium adipate copolymer (nylon 26/66), a caprolactam/hexamethylenediammonium adipate/hexamethylenediammonium sebacate copolymer (nylon 66/610), an ethyleneammonium adipate/hexamethylenediammonium adipate/hexamethylenediammonium sebacate copolymer (nylon 6/66/610), polyhexamethylene isophthalamide, polyhexamethylene terephthalamide, a hexamethylene isophthalamide/terephthalamide copolymer, or those in which these polyamide resins are modified with aromatic amines such as methylenebenzylamine and methaxylenediamine, and methaxylylenediammonium adipate, but in the present invention, the polyamide resin in which the polymer end is capped with a carboxyl group and an amino group is preferably used.

As the polyamide resin in which the polymer end is capped, a polyamide resin containing caproamide as the main compositional unit, which is adjusted so that the amount [X] of a terminal carboxylic group and the amount [Y] of a terminal amino group satisfy {(100 × [Y])/([X] + [Y])} ≥ 5 (provided that the units of [X] and [Y] are µeq/g·polymer) by using an end-cap agent is used.

As the end-cap agent, carboxylic acid having 2 to 23 carbons or diamine having 2 to 20 carbons are used. Herein, examples of the monocarboxylic acid having 2 to 23 carbons are aliphatic monocarboxylic acids (such as acetic acid, propionic acid, butyric acid, valeric acid, caproic acid, enanthic acid, caprylic acid, capric acid, pelargonic acid, undecanoic acid, laurylic acid, tridecyl acid, myristic acid, myritreic acid, palmitic acid, stearic acid, oleic acid, linolic acid, arachinic acid and behenic acid); alicyclic monocarboxylic acids (such as cyclohexane carboxylic acid, methylcyclohexane carboxylic acid); aromatic monocarboxylic acid (such as benzoic acid, toluic acid, ethyl benzoate and phenyl acetate). Further, in addition to the above-mentioned monocarboxylic acids, dicarboxylic acids such as aliphatic dicarboxylic acids (such as malonic acid, succinic acid, glutaric acid, adipic acid, pimelic acid, suberic acid, azelaic acid, sebacic acid, dodecanedionic acid, tetradecanedionic acid, hexadecanedionic acid, hexadecenedionic acid, octadecanedionic acid, octadecenedionic acid, eicosadionic acid, eicosendionic acid, docosanedionic acid and 2,2,4-trimethyladipic acid), alicyclic dicarboxylic acids (such as 1,4-cyclohexane dicarboxylic acid), aromatic dicarboxylic acids (such as terephthalic acid, isophthalic acid, phthalic acid and xylylene dicarboxylic acid) can be also used or can be used in combination thereof.

Example of the diamine having 2 to 20 carbons are aliphatic diamines (such as ethylenediamine, trimethylenediamine, tetramethylenediamine, pentamethylenediamine, hexamethylenediamine, octamethylenediamine, decamethylenediamine, dodecamethylenediamine, hexadecamethylenediamine, and 2,2,4-(or 2,4,4-) trimethylhexamethylenediamine), alicyclic diamines (such as cyclohexanediamine and bis-(4,4'-aminocyclohexyl)methane), and aromatic diamines (such as xylylenediamine).

A degree of polymerization of the polyamide resin (B) is not particularly limited, but it is preferable that relative viscosity measured according to JIS K6810 is 1.7 to 5.0, and particularly 2.0 to 5.0.

Further, as the polymerization process of the polyamide resin (B), melting polymerization, interface polymerization, solution polymerization, mass polymerization, solid phase polymerization, or a process combining these can be adopted. Further, as a raw material of polyamide, ε-caprolactam is preferable in particular from the viewpoints that more favorable boiling resistance and retort resistance can be obtained.

The laminated article of the present invention comprises a layer (I) containing the EVOH (A) and the polyamide resin (B), and an amount ratio of the EVOH (A) and the polyamide resin (B) in the layer (I) is not particularly limited, but (B) is preferably contained in an amount of 10 to 40 parts by weight (further 15 to 35 parts by weight, and particularly 20 to 30 parts by weight) based on 100 parts by weight of (A). When the amount is less than 10 parts by weight, appearance and delamination resistance after a retort treatment tends to be lowered, and inversely, when it exceeds 40 parts by weight, it is not preferable since long-run processability tends to be lowered.

To the layer (I), within a range where the object of the present invention is not damaged, lubricants such as saturated fatty acid amides (such as stearic acid amide), unsaturated fatty acid amides (such as oleic acid amide), bisfatty acid amides (such as ethylenebisstearic acid amide), low molecular weight polyolefins (such as low molecular weight polyethylene and low molecular weight polypropylene having a molecular weight of about 500 to 10000); an organic acid (for example, acetic acid, propionic acid, and stearic acid), inorganic acid (for example, boric acid, phosphoric acid), inorganic salts (for example, hydrotalcite), plasticizers (for example, aliphatic polyvalent alcohols such as ethyleneglycol, glycerin, and hexanediol), oxygen absorbents (for example, reduced iron powders, potassium sulfite, ascorbic acid, hydroquinone and gallic acid), a heat stabilizer, a photo-stabilizer, an ultraviolet absorber, an colorant, an antistatic agent, a surfactant, an antibiotic, an antiblocking agent, a slipping agent, and a filler (such as an inorganic filler), other than those, resins (for example, polyolefin and polyester) may be compounded. In addition, to the layer (II) described later, it is also possible to compound in the same manner.

In the present invention, the layer (II) laminated together with the above-mentioned layer (I) is a layer of the polyamide resin (C). The polyamide resin (C) can be selected from those described in the above-mentioned polyamide resin (B), and among those, it is preferable to use nylon 6, nylon 66 and nylon 6/66.

The laminated article of the present invention comprises the above-mentioned layer (I) and layer (II). When the laminated article of the present invention is prepared, the layer (I) and the layer (II) are laminated directly or through an adhesive resin layer or other layer. Examples of lamination processes are a process of extruding the layer (I) and the layer (II) directly or through an adhesive resin layer or other layer, a process of extruding in the same manner and laminating the layer (I) or (II) on the layer (II) or (I), a process of co-extruding the layer (I) and the layer (II) directly or through an adhesive resin layer or other layer, a process of dry-laminating the layer (I) and the layer (II) directly or through other layer using adhesives such as an organic titanium compound, an isocyanate compound, a polyester compound or a polyurethanated compound. The melt molding temperature at the above-mentioned extrusion is often selected from a range of 150 to 300°C.

As the other layer, it is useful to use a thermoplastic resin, and specific examples are polyolefin resins such as: homopolymer or copolymers of an olefin such as a linear low density polyethylene, a low density polyethylene, an ultra low density polyethylene, a middle density polyethylene, a high density polyethylene, an ethylene-vinyl acetate copolymer, an ionomer, an ethylene-propylene (block or random) copolymer, an ethylene-acrylic acid ester copolymer, ethylene-acrylic ester copolymer, ethylene-methacrylic acid copolymer, ethylene-methacrylic ester copolymer, polypropylene, a propylene-α-olefin copolymer (α-olefin having 4 to 20 carbons), polybutene and polypentene, or polyolefin resins in broad definition such as those obtained by graft-modifying homopolymers or copolymers of an olefin with unsaturated carboxylic acid or its ester, polyester resin, polyamide resin (including copolymerized polyamide), polyvinyl chloride, polyvinylidene chloride, an acrylic resin, a polystyrene resin, vinyl ester resin, a polyester elastomer, a polyurethane elastomer, chlorinated polyethylene, chlorinated polypropylene, an aromatic or aliphatic polyketone, further, polyalcohols obtained by reducing these, further, other EVOH. Polypropylene, an ethylene-propylene (block or random) copolymer, polyamide, polyethylene, an ethylene-vinyl acetate copolymer, polystyrene, polyethyleneterephthalate (PET) and polyethylenenaphthalate (PEN) are preferably used from the viewpoint of practical usability such as the characteristic of the laminated article, and polypropylene, an ethylene-propylene (block or random) copolymer and polyethylene, which are excellent in elongation property, transparency and flexibility, are particularly preferable.

As for a layer composition of the laminated article, when the layer (I) is set as a(a1, a2, ---), the layer (II) is set as b(b1, b2, ----) and other substrate, for example, a thermoplastic resin layer is set as c(c1, c2, ----), arbitrary combinations such as b/a/b, b/a1/a2, b/a/c, b/a/c1/c2, b/c1/a/c1/c2 and b/a/b/c are possible for forming the shapes of a film, a sheet or a bottle, and particularly, the layer compositions of b/a/b, b/a/c, b/a/c1/c2, b/c1/a/c1/c2 and b/a/b/c are preferable. The outermost layer of the laminated article of the present invention is preferably a layer of a polyamide resin from the viewpoints of luster property, printability, odor and barrier property. Further, the innermost layer is preferably a layer of a polyolefin resin from the viewpoints of heat seal property and water resistance.

Further, an adhesive resin layer can be provided between respective layers if necessary in a lamination composition as described above. As the adhesive resin, various resins can be used and they are different depending on the kinds of resins of a, b and c. Although it cannot be categorically mentioned, a modified olefin polymer containing a carboxyl group which is obtained by chemically bonding unsaturated carboxylic acid or its anhydride with the olefin polymer (homopolymer or copolymer of the olefins described above) by reactions such as an addition reaction and a graft reaction can be mentioned. Specifically, one or a mixture of at least 2 selected from compounds such as maleic anhydride graft-modified polyethylene, maleic anhydride graft-modified polypropylene, a maleic anhydride graft-modified ethylene-propylene (block or random) copolymer, a maleic anhydride graft-modified ethylene-acrylate copolymer, and a maleic anhydride graft-modified ethylene-vinyl acetate copolymer are exemplified as a preferable example. Herein, an amount of the unsaturated carboxylic acid or its anhydride contained in the olefin polymer is preferably 0.001 to 3 % by weight, more preferably 0.01 to 1 % by weight, and particularly preferably 0.03 to 0.5 % by weight. When the amount is small, adhesion property may become insufficient, and inversely, when it is large, it is not preferable that a crosslinking reaction occurs and moldability may become poor. Further, the resin of the layers (I) and (II), the resin composition, or other EVOH, polyisobutylene, a rubber and elastomer component such as an ethylene-propylene rubber, and further, the resin of the c layer can be also blended to these adhesive resins. In particular, it is useful that adhesive property may be improved by blending a polyolefin resin which is different from the polyolefin resin which is the matrix of the adhesive resin.

The thickness of respective layers of the laminated article cannot be categorically described depending on the layer composition, a kind of c, uses, forms of a container, required physical properties, but the a layer is-usually selected from a range of about 3 to 500 µm (further 5 to 200 µm), the b layer is selected from a range of about 3 to 5000 µm (further, 5 to 1000 µm), the c layer is selected from a range of about 10 to 5000 µm (further, 30 to 1000 µm) and the adhesive resin layer is selected from a range of about 5 to 400 µm (further, 10 to 150 µm). When the a layer is less than 3 µm, gas barrier property is in short, and thickness control thereof is unstable, and inversely, when it exceeds 500 µm, it is not preferable since impact strength is inferior and it is uneconomical. When the b layer is less than 3 µm, rigidity is -insufficient, and inversely, when it exceeds 5000 µm, it is not preferable since a weight becomes large and it is uneconomical. When the adhesive resin layer is less than 5 µm, the adhesion property between layers is insufficient and thickness control thereof is unstable, and inversely, when it exceeds 400 µm, it is not preferable since a weight becomes large and it is uneconomical.

The laminated article is used for products with various shapes as it is, but further, a heating and stretching treatment is preferably carried out in order to improve the physical properties of the laminated article and mold into the arbitrary desired shapes of a container. Herein, the heating and stretching treatment is referred to as an operation of uniformly molding the laminated article in the shapes of a film, a sheet, or a parison, which is thermally heated, into the shapes of a cup, a tray, a tube, a bottle or a film by the means such as chuck, plug, vacuum force, pneumatic force, blow and the like. The stretching may be either of uniaxial drawing or biaxial drawing, and the drawing at magnification being as high as possible is favorable for physical properties. A stretched article excellent in gas barrier property, which does not generate pin holes, cracks, unevenness, uneven thickness, delamination etc, is obtained.

As the drawing process, a process having high stretching magnification can be also adopted among roll stretching, tenter drawing, tubular orientation, stretching blow, vacuum molding, pneumatic molding, vacuum pneumatic molding and the like. In case of the biaxial drawing, either of the simultaneous biaxial drawing system and the successive biaxial drawing system can be adopted. The drawing temperature is selected from a range of about 60 to 260°C, and preferably a range from 80 to 250°C.

After the completion of drawing, then it is preferable to also carry out heat set. The heat set can be carried out by known procedures, and a heat treatment is conducted on the drawn film at 80 to 260°C, preferably 100 to 250°C, for about 2 to 600 seconds while keeping a tension state.

Further, when the laminated article is used for thermal shrinkable packaging uses such as raw meat, processed meat and cheese, a product film is prepared without carrying out the heat set after drawing, and after storing the raw meat, processed meat and cheese in the film, the heat treatment is carried out at 50 to 130°C, preferably 70 to 120°C, for about 2 to 300 seconds to thermally shrink the film, and tight packing is carried out.

The shape of the laminated article obtained in thins manner may be arbitrary one, and a film, a sheet, a tape, a cup, a tray, a tube, a bottle, a pipe, a filament, an extruded article with an irregular shape section are exemplified. The obtained laminated article may be subject to a treatment such as a heat treatment, a cooling treatment, a rolling treatment, a printing treatment, a dry laminate treatment, a solution or extrusion-coating treatment, a bag making process, a deep-drawing process, a box process, a tube process, and a split process, if necessary.

Containers comprising the above-obtained cup, tray, tube, bottle, pouch, and bag, or a bag or a lid material comprising the above-obtained oriented film are useful as various containers for a flavoring material such as mayonnaise and dressing, fermented foods such as soybean paste, oil and fat foods such as salad oil in addition to general foods, beverages, cosmetics, pharmaceuticals, detergents, perfumeries, industrial chemicals, agricultural chemicals, fuel and the like, however, they are useful for packaging uses for a material to be beautifully visualized such as foods and pharmaceuticals from the viewpoint that the film excellent in appearance in particular is obtained in the present invention.

### EXAMPLES

The present invention is specifically explained in the following based on Examples.

Further, "parts" and "%" in Examples indicate the weight basis unless otherwise noticed

The measurement of an amount of a boron compound in the EVOH (A) and a resin composition was carried out by alkali fusion of the EVOH (A) and the resin composition to determine the quantify of boron by the ICP emission spectrochemical analysis.

Further, the measurement of the amount of an alkali (earth) metal was carried out by determining the quantity of the alkali (earth) metal by atomic absorption spectrometry, dissolving EVOH (A) and the resin composition in a hydrochloric acid solution after ashing.

### EXAMPLE 1

100 parts of EVOH (A) [ethylene in an amount of 32 % by mol, a degree of saponification of 99.6 % by mol, a MFR of 3.2 g/10 min (210°C, a load of 2160 g), a boric acid in an amount of 0.03 % calculated in terms of boron, a sodium acetate in an amount of 1 ppm calculated in terms of sodium, a magnesium acetate in an amount of 35 ppm calculated in terms of magnesium, a calcium hydrogen phosphate in an amount of 25 ppm calculated in terms of phosphorus, and contains pentaerythritol tetrakis[3-(3,5-di-t-butyl-4-hydroxyphenyl)propionate] in an amount of 100 ppm], and
40 parts of end-capped nylon (B) [an amount of a terminal carboxylic group [X] of 20 µeq/g, an amount of a terminal amino group [Y] of 26 µeq/g, and satisfies {(100 × [Y])/([X] + [Y])} = (100 × 26)/(20 + 26) = 56.5 ≥ 5. Specifically, an autoclave was charged with 60 kg of ε-caprolactam, 1.2 kg of water, and octadecylamine so as to be 6.78 µeq per 1 mole of ε-caprolactam, the autoclave was tightly closed under the nitrogen atmosphere, a temperature was raised to 250°C, and a reaction was carried out under pressurization for 2 hours with stirring, thereafter, the pressure was reduced to 180 torr by discharging to carry out the reaction for 2 hours, then, nitrogen was introduced to return to have a normal pressure, after that, stirring was stopped, the content was extracted as strand to be prepared as chips, an unreacted monomer was removed by extraction with boiled water and the chips were dried.] were provided for a biaxial extruder having 30 mm φ to be kneaded, and then, pellets of the objective resin composition were obtained.

Further, the ratio (M1/M2) of a sodium metal salt to a bivalent metal salt in the EVOH in the obtained resin composition was 0.03 calculated in terms of metal weight.

The laminated article of the present invention was prepared by using the obtained resin composition (pellets), and evaluations of appearance, delamination resistance and gas barrier property after retort was carried out based on the following procedures.

### (Appearance)

The above-mentioned resin composition (I), nylon-6 ["NOVAMID 1022-1" available from Mitsubishi Engineering Plastics Co., Ltd.] (C), polypropylene ["FL6CK" available from Japan Polychem Corporation] and an adhesive resin ["ADMER QF500" available from Mitsui Chemicals Inc., maleic anhydride-modified polypropylene] (E) are fed to a co-extrusion multilayer film molding machine with a feed block system (manufactured by Gunze Sangyo Inc.) and a laminated article (multilayer film) having a layer composition of (C)/(I)/(E)/(D) = 20/20/10/80 (µm: thickness) is molded. The four sides thereof are sealed so that the (D) layer of the obtained multilayer film is inside, a pouch with 15 cm × 15 cm containing 150 ml of distilled water is prepared, the pouch is treated with retort at 121°C for 90 minutes, the appearance of the pouch immediately after taking out is visually observed, and the evaluation is carried as follows.
O ··· Transparency is high on the whole, and there is no unevenness.
Δ ··· Hazing is locally observed.
× ··· Uneven hazing is observed on the whole

### (Delamination resistance)

Ten points of a section of the pouch are observed immediately after retort, and delamination (voids caused by fracture of the resin composition layer (I)) generated in the resin composition layer (I) is visually observed, and evaluation is carried out as follows.
○ ··· Delamination is less than 2 points.
Δ ··· Delamination is at least 3 points and less than 5 points.
× ··· Delamination is at least 5 points.

### (Gas barrier property)

The oxygen transmission ratio (OTR) of the multilayer film cut out from the pouch after the above-described retort is measured, it is compared with that before the retort, a ratio of [oxygen transmission ratio after retort]/[oxygen transmission ratio before retort] is obtained, and evaluation is carried out as follows.

Further, the measurement is carried out under the conditions of 20°C and being dry by using an oxygen transmission ratio measuring device "OX-TRAN2/20" manufactured by MOCON Inc.

Further, the lowest value within 2 hours after the retort is adopted for the oxygen transmission ratio immediately after the retort.
○ ··· The ratio is less than 6.0.
Δ The ratio is at least 6.0 and less than 10.0.
× ··· The ratio is at least 10.0.

Further, evaluations of long-run processability, odor, and coloring are carried out based on the following procedures.

### (Long-run processability)

Molding of the above-mentioned laminated article (multilayer film) is continuously carried out for 120 hours, the obtained laminated article is visually observed to examine the state of gels having a diameter of at least 0.2 mm and black spot generated per 100 cm², and evaluation is carried out as follows
○ ··· Less than 5 are generated.
Δ 6 to 10 are generated.
× ··· At least 11 are generated.

### (Odor)

The above-mentioned laminated article (multilayer film) is cut out to have a size of 20 cm × 20 cm within 30 minutes after molding, the four sides thereof are sealed so that the (D) layer of the multilayer film is inside, and a pouch not containing a content is prepared. Further, as a comparison sample, a pouch for comparison of the multilayer film using the EVOH (A) alone is prepared. These pouch are treated with retort at 121°C for 90 minutes, odor inside of the pouches after one hour and after one week of completion of the retort is actually smelled, and evaluation is carried out as follows.
○ ··· Odor equal to that of the pouch for comparison is detected.
Δ Some odor is smelled after one week, but odor equal to that of the pouch for comparison is detected after 1 hour.
× ··· Odor more than that of the pouch for comparison is detected in one hour.

### (Coloring)

The above-mentioned laminated article (multilayer film) is cut out to have a size of 20 cm × 20 cm within 30 minutes after molding, the four sides thereof are sealed so that the (D) layer of the multilayer film is inside, and a pouch filled with 200 cc of distilled water is prepared. Further, as a comparative sample, a pouch for comparison of a multilayer film using the EVOH (A) alone is prepared. These pouches are treated with retort at 135°C for 180 minutes, and the evaluation of color tones of pouches after one week of completion of the retort is visually carried as follows.
○ ··· Original color tone is kept without coloring les than the pouch for comparison.
Δ Coloring is slightly observed but the coloring was equal to the pouch for comparison.
× ··· Coloring is more remarkable than the comparative sample for comparison.

### EXAMPLE 2

Example 2 was carried out in the same manner as Example 1, except for using an EVOH containing ethylene in amount of 32 % by mol, having a saponification degree of 99.6 % by mol, a MFR of 3.2 g/10 min (210°C, a load of 2160 g), containing a sodium acetate in an amount of 220 ppm calculated in terms of sodium, a zinc stearate in an amount of 30 ppm calculated in terms of zinc, a calcium hydrogen phosphate in amount of 25 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 7.3 calculated in terms of metal weight.

### EXAMPLE 3

Example 3 was carried out in the same manner as Example 1, except for using an EVOH containing an ethylene in amount of 32 % by mol, having a saponification degree of 99.6 % by mol, a MFR of 3.2 g/10 min (210°C, a load of 2160 g), containing sodium acetate in an amount of 1 ppm calculated in terms of sodium, magnesium acetate in an amount of 35 ppm calculated in terms of magnesium, a calcium hydrogen phosphate in amount of 25 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 0.03 calculated in terms of metal weight.

### EXAMPLE 4

The Example 4 was carried out in the same manner as Example 1 except for using nylon-6 was used in place of the end-capped nylon (B) in Example 1 to obtain a laminated article, and the evaluation was carried out in the same manner.

### EXAMPLE 5

The Example 5 was carried out in the same manner as Example 1 except for using EVOH containing ethylene on an amount of 44 % by mole, having a saponification degree of 99.6 % by mol, and a MFR of 3.4 g/10 min (210°C, a load of 2160 g) as the EVOH (A) in Example 1 to obtain a laminated article, and the evaluation was carried out in the same manner.

### EXAMPLE 6

Example 6 was carried out in the same manner as Example 1, except for using an EVOH containing ethylene in amount of 32 % by mol, having a saponification degree of 99.6 % by mol, a MFR of 3.2 g/10 min (210°C, a load of 2160 g), containing a sodium acetate in an amount of 150 ppm calculated in terms of sodium, a calcium stearate in an amount of 150 ppm calculated in terms of calcium, phosphorus acid in amount of 25 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 1.0 calculated in terms of metal weight.

### COMPARATIVE EXAMPLE 1

Comparative Example 1 was carried out in the same manner as Example 1, except for using an EVOH containing an ethylene in amount of 32 % by mol, having a saponification degree of 99.6 % by mol, an MFR of 3.2 g/10 min (210°C, a load of 2160 g), containing a sodium acetate in an amount of 150 ppm calculated in terms of sodium, magnesium acetate in an amount of 5 ppm calculated in terms of magnesium, calcium hydrogen phosphate in amount of 25 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 30 calculated in terms of metal weight.

### COMPARATIVE EXAMPLE 2

Comparative Example 2 was carried out in the same manner as Example 1, except for using an EVOH containing ethylene in amount of 32 % by mole, having a saponification degree of 99.6 % by mol, a MFR of 3.2 g/10 min (210°C, a load of 2160 g), containing sodium acetate in an amount of 150 ppm calculated in terms of sodium, magnesium acetate in an amount of 5 ppm calculated in terms of magnesium, a calcium hydrogen phosphate in amount of 25 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 30 calculated in terms of metal weight.

### COMPARATIVE EXAMPLE 3

Comparative Example 3 was carried out in the same manner as Example 1, except for using an EVOH containing ethylene in amount of 32 % by mole, having a saponification degree of 99.6 % by mol, a MFR of 3.2 g/10 min (210°C, a load of 2160 g), containing sodium acetate in an amount of 1 ppm calculated in terms of sodium, magnesium acetate in an amount of 35 ppm calculated in terms of magnesium, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner. Further, the ratio (M1/M2) of a sodium metal salt to a bivalent metal salt in the EVOH in the obtained resin composition was 0.03 calculated in terms of metal weight.

### COMPARATIVE EXAMPLE 4

Comparative Example 4 was carried out in the same manner as Example 1, except for using an EVOH containing ethylene in amount of 32 % by mole, having a saponification degree of 99.6 % by mol, an MFR of 3.2 g/10 min (210°C, a load of 2160 g), containing sodium acetate in an amount of 1 ppm calculated in terms of sodium, a magnesium acetate in an amount of 35 ppm calculated in terms of magnesium, a calcium hydrogen phosphate in amount of 80 ppm calculated in terms of phosphorus, and pentaerythritol tetrakis[3-(3,5-di-t-butyl-4-hydroxyphenyl)propionate] in an amount of 100 ppm respectively as the EVOH (A) in Example 1 to obtain a laminated article, and the evaluation was carried out in the same manner. Further, the ratio (M1/M2) of a sodium metal salt to a bivalent metal salt in the EVOH in the obtained resin composition was 0.03 calculated in terms of metal weight.

### COMPARATIVE EXAMPLE 5

Comparative Example 5 was carried out in the same manner as Example 1, except for using an EVOH containing ethylene in amount of 32 % by mole, having a saponification degree of 99.6 % by mol, an MFR of 3.2 g/10 min (210°C, a load of 2160 g), containing sodium acetate in an amount of 1 ppm calculated in terms of sodium, a magnesium acetate in an amount of 35 ppm calculated in terms of magnesium, a calcium hydrogen phosphate in amount of 25 ppm calculated in terms of phosphorus, and pentaerythritol tetrakis[3-(3,5-di-t-butyl-4-hydroxyphenyl)propionate] in an amount of 5 ppm, respectively] as the EVOH (A) in Example 1 to obtain a laminated article, and the evaluation was carried out in the same manner. Further, the ratio (M1/M2) of a sodium metal salt to a bivalent metal salt in the EVOH in the obtained resin composition was 0.03 calculated in terms of metal weight.

### COMPARATIVE EXAMPLE 6

Comparative Example 6 was carried out in the same manner as Example 1, except for using an EVOH containing ethylene in amount of 32 % by mole, having a saponification degree of 99.6 % by mol, an MFR of 3.2 g/10 min (210°C, a load of 2160 g), containing sodium acetate in an amount of 1 ppm calculated in terms of sodium, a magnesium acetate in an amount of 35 ppm calculated in terms of magnesium, a calcium hydrogen phosphate in amount of 25 ppm calculated in terms of phosphorus, and pentaerythritol tetrakis[3-(3,5-di-t-butyl-4-hydroxyphenyl)propionate] in an amount of 1200 ppm respectively as the EVOH (A) in Example 1 to obtain a laminated article, and the evaluation was carried out in the same manner.

Further, the ratio (M1/M2) of a sodium metal salt to a bivalent metal salt in the EVOH in the obtained resin composition was 30 calculated in terms of metal weight.

Evaluation results of Examples and Comparative Examples are shown in Table 1.

**TABLE 1**

| | Appearance | Delamination resistance | Gas barrier property | Long-run processability | odor | coloring |
|---|---|---|---|---|---|---|
| Ex. 1 | ○ | ○ | ○ | ○ | ○ | ○ |
| Ex. 2 | Δ | ○ | ○ | ○ | ○ | ○ |
| Ex. 3 | ○ | Δ | ○ | ○ | ○ | ○ |
| Ex. 4 | ○ | ○ | Δ | Δ | Δ | ○ |
| Ex. 5 | ○ | ○ | ○ | Δ | Δ | Δ |
| Ex. 6 | ○ | ○ | ○ | Δ | ○ | Δ |
| Com. Ex. 1 | ○ | × | Δ | × | Δ | × |
| Com. Ex. 2 | ○ | × | Δ | × | Δ | × |
| Com. Ex. 3 | ○ | ○ | ○ | × | × | Δ |
| Com. Ex. 4 | ○ | ○ | ○ | × | × | × |
| Com. Ex. 5 | ○ | ○ | Δ | × | × | × |
| Com. Ex. 6 | ○ | ○ | ○ | × | × | × |

### INDUSTRIAL APPLICABILITY

The laminated article of the present invention is a laminated article excellent in appearance after a retort treatment, delamination resistance and gas barrier property, at the same time excellent in a property such as long-run processability, and performance of preventing odor and coloring. A container comprising a cup, tray, tube, bottle, pouch, and bag, and a bag or a lid material comprising an oriented film, which are composed of the laminated article of the present invention, are useful as various containers for, in addition to general foods, seasonings such as mayonnaise and dressing, fermented foods such as soybean paste, oil and fat foods such as salad oil, beverages, cosmetics, pharmaceuticals, detergents, perfumeries, industrial chemicals, agricultural chemicals, and fuel, but they are particularly useful for uses for retort sterilization and boiling sterilization of general foods and pharmaceuticals and the like.

## Claims

1. A laminated article, comprising a layer (I) containing a saponified product of an ethylene-vinyl acetate copolymer (A) and a polyamide resin (B) and a layer (II) of a polyamide resin (C) which is adjacent to the layer (I) directly or via an adhesive resin layer,
wherein the saponified product of an ethylene-vinyl acetate copolymer (A) contains a sodium salt (M1) and a bivalent metal salt (M2), and an amount ratio (M1/M2) of the sodium salt (M1) to the bivalent metal salt (M2) is 0.01 to 15 calculated in terms of metal weight,
further comprises 3 to 50 ppm of a phosphorus compound calculated in terms of phosphorus and 10 to 1000 ppm of a hindered phenol antioxidant,
wherein the phosphorus compound is selected from the group consisting phosphoric acid, sodium phosphate, disodium hydrogen phosphate, sodium dihydrogen phosphate, calcium hydrogen phosphate, potassium dihydrogen phosphate and dipotassium hydrogen phosphate.

2. The laminated article of Claim 1, wherein the amount ratio (M1/M2) of the sodium salt (M1) to the bivalent metal salt (M2) is 0.02 to 5 calculated in terms of metal weight.

3. The laminated article of Claim 1 or 2, wherein the polyamide resin (B) is an end-capped polyamide resin.

4. The laminated article of Claim 1, 2 or 3, wherein the saponified product of an ethylene-vinyl acetate copolymer (A) further comprises a boron compound.

5. The laminated article of Claim 1, 2, 3 or 4,
wherein the outermost layer is the layer of the polyamide resin.

6. The laminated article of Claim 1, 2, 3, 4 or 5,
wherein the innermost layer is the layer of a polyolefin resin.

## Patentansprüche

1. Laminierter Artikel, umfassend eine Schicht (I), die ein verseiftes Produkt eines Ethylen-Vinylacetat-Copolymers (A) und ein Polyamidharz (B) enthält, und eine Schicht (II) aus einem Polyamidharz (C), welche zu der Schicht (I) direkt oder über eine adhäsive Harzschicht benachbart ist,
wobei das verseifte Produkt eines Ethylen-Vinylacetat-Copolymers (A) ein Natriumsalz (M1) und eines bivalenten Metallsalzes (M2) enthält, und ein Mengenverhältnis (M1/M2) des Natriumsalzes (M1) zu dem bivalenten Metallsalz (M2) 0,01 bis 15, berechnet in Bezug auf Metallgewicht, beträgt,
umfasst ferner 3 bis 50 ppm einer Phosphorverbindung, berechnet in Bezug auf Phosphor, und 10 bis 1000 ppm eines gehinderten Phenolantioxidanzmittels,
wobei die Phosphorverbindung ausgewählt ist aus der Gruppe bestehend aus Phosphorsäure, Natriumphosphat, Dinatriumhydrogenphosphat, Natriumdihydrogenphosphat, Calciumhydrogenphosphat, Kaliumdihydrogenphosphat und Dikaliumhydrogenphosphat.

2. Laminierter Artikel nach Anspruch 1, wobei das Mengenverhältnis (M1/M2) des Natriumsalzes (M1) zu dem bivalenten Metallsalz (M2) 0,02 bis 5, berechnet in Bezug auf Metallgewicht, beträgt.

3. Laminierter Artikel nach Anspruch 1 oder 2, wobei das Polyamidharz (B) ein endverkapptes Polyamidharz ist.

4. Laminierter Artikel nach Anspruch 1, 2 oder 3, wobei das verseifte Produkt eines Ethylen-Vinylacetat-Copolymers (A) ferner eine Borverbindung aufweist.

5. Laminierter Artikel nach Anspruch 1, 2, 3 oder 4, wobei die äußerste Schicht die Schicht des Polyamidharzes ist.

6. Laminierter Artikel nach Anspruch 1, 2, 3, 4 oder 5, wobei die innerste Schicht die Schicht eines Polyolefinharzes ist.

## Revendications

1. Article stratifié, comprenant une couche (I) contenant un produit saponifié d'un copolymère d'éthylène-acétate de vinyle (A) et d'une résine polyamide (B) et une couche (II) d'une résine polyamide (C) qui est adjacente à la couche (I) directement ou par l'intermédiaire d'une couche de résine adhésive,
dans lequel le produit saponifié d'un copolymère d'éthylène-acétate de vinyle (A) contient un sel de sodique (M1) et un sel métallique bivalent (M2), et un rapport des quantités (M1/M2) du sel sodique (M1) au sel métallique bivalent (M2) est de 0,01 à 15 calculé en termes de poids de métal,
comprend en outre 3 à 50 ppm d'un composé de phosphore calculé en termes de phosphore et 10 à 1 000 ppm d'un antioxydant phénol bloqué,
dans lequel le composé de phosphore est choisi dans le groupe constitué par l'acide phosphorique, le phosphate de sodium, le phosphate acide de disodium, le phosphate acide de sodium, le phosphate acide de calcium, le phosphate monobasique de potassium et le phosphate dibasique de potassium.

2. Article stratifié selon la revendication 1, dans lequel le rapport des quantités (M1/M2) du sel sodique (M1) au sel métallique bivalent (M2) est de 0,02 à 5 calculé en termes de poids de métal.

3. Article stratifié selon la revendication 1 ou 2, dans lequel la résine polyamide (B) est une résine polyamide à extrémité coiffée.

4. Article stratifié selon la revendication 1, 2 ou 3, dans lequel le produit saponifié d'un copolymère d'éthylène-acétate de vinyle (A) comprend en outre un composé de bore.

5. Article stratifié selon la revendication 1, 2, 3 ou 4, dans lequel la couche le plus à l'extérieur est la couche de résine polyamide.

6. Article stratifié selon la revendication 1, 2, 3, 4 ou 5, dans lequel la couche le plus à l'intérieur est la couche d'une résine polyoléfine.
